**Europäisches Patentamt**

(19) **European Patent Office**

**Office européen des brevets**

(11) Numéro de publication: **0 123 055**
**B1**

(12) # FASCICULE DE BREVET EUROPEEN

(45) Date de publication du fascicule du brevet:
**03.06.87**

(21) Numéro de dépôt: **84102008.4**

(22) Date de dépôt: **23.03.81**

(60) Numéro de publication de la demande initiale en application de l'article 76 CBE: **0036821**

(51) Int. Cl.⁴: **G 21 C 3/32, F 16 L 13/14**

(54) **Procédé de démontage et reconstruction des tubes-guides des assemblages combustibles pour réacteur nucléaire à eau légère.**

(30) Priorité: **26.03.80 FR 8006695**

(43) Date de publication de la demande:
**31.10.84 Bulletin 84/44**

(45) Mention de la délivrance du brevet:
**03.06.87 Bulletin 87/23**

(84) Etats contractants désignés:
**BE DE GB IT SE**

(56) Documents cités:
**FR - A - 2 189 814**
**GB - A - 1 601 090**
**US - A - 3 791 466**

(73) Titulaire: **COMMISSARIAT A L'ENERGIE ATOMIQUE Etablissement de Caractère Scientifique Technique et Industriel, 31/33, rue de la Fédération, F-75015 Paris (FR)**
Titulaire: **FRAMATOME ET CIE., Tour Fiat 1, Place de la Coupole, F-92400 Courbevoie (FR)**

(72) Inventeur: **Leclerc, Joseph, 30, route de Champagne, F-69370 Saint Didier (FR)**

(74) Mandataire: **Mongrédien, André et al, c/o BREVATOME 25, rue de Ponthieu, F-75008 Paris (FR)**

ACTORUM AG

# Description

La présente invention se rapporte aux assemblages combustibles pour réacteurs nucléaires et plus particulièrement aux assemblages combustibles pour les réacteurs refroidis à l'eau légère.

De façon plus particulière encore, la présente invention a pour objet un procédé de démontage et reconstruction des tubes guides de tels assemblages combustibles dont on commencera par conséquent par rappeler la constitution générale connue.

On pourra se référer utilement, pour la description d'assemblages combustibles pour réacteurs à eau légère d'un type connu, aux deux brevets américains US–A–4 061 536 et US–A–3 791 466 au nom de la Société Westinghouse Electric Corporation. Dans des éléments du genre de ceux décrits dans ces brevets, le combustible nucléaire du réacteur est réparti dans une pluralité de crayons combustibles logés dans le coeur du réacteur selon une répartition en assemblages jointifs de section générale carrée. Chaque assemblage combustible, s'étendant sur plusieurs mètres de long et possédant une armature mécanique rigide est maintenu entre les plaques de coeur supérieure et inférieure. Cette armature comporte deux pièces d'extrémité respectivement supérieure et inférieure munies d'orifices permettant le passage de l'eau de réfrigération qui circule verticalement de bas en haut, et un certain nombre de tubes guides assurant la solidité de l'assemblage par leur fixation aux pièces d'extrémité supérieure et inférieure. Le long de chaque assemblage, un certain nombre de grilles de maintien, fixées aux tubes guides et délimitant des cellules de section carrée, permettent le passage et le maintien transversal des crayons de combustible eux-mêmes qui sont pour ainsi dire suspendus par frottement dans les grilles sans contact avec les pièces d'extrémité supérieure et inférieure.

De façon également connue, les tubes guides ont en plus de leur fonction de maintien mécanique de l'assemblage, une fonction de logement des crayons absorbants qui servent à tout instant au contrôle de la réaction en chaîne et que l'on insère le plus rapidement possible dans l'assemblage, au travers de la pièce supérieure ajourée à cet effet, lorsque l'on veut, pour une raison quelconque, provoquer un arrêt rapide du fonctionnement du réacteur.

De façon classique, les pièces d'extrémité des assemblages combustibles sont en acier inoxydable ou en inconel, c'est-à-dire en des matériaux absorbant assez fortement les neutrons, alors que les tubes guides sont en zircaloy de propriétés neutroniques beaucoup plus favorables.

Par ailleurs, dans ces mêmes solutions connues jusqu'à présent, la fixation du tube guide sur la pièce d'extrémité supérieure de l'assemblage se fait à l'aide d'un manchon intermédiaire en un matériau compatible avec celui de la pièce d'extrémité, car il n'est pas possible de souder directement le tube guide en zircaloy sur la pièce en acier ou en inconel. Ceci conduit par conséquent à utiliser un manchon d'acier emmanché sur la surface externe de la partie supérieure du tube guide et maintenu à l'aide d'un certain nombre de déformations mécaniques qui assurent la fixation du manchon sur le tube guide. Ce manchon est lui-même soudé ou brasé d'une part à la pièce d'extrémité supérieure et, d'autre part, à la grille supérieure, assurant ainsi la liaison mécanique de la pièce d'extrémité avec l'ensemble de la structure. C'est ce que décrit le document US–A–3 791 466 aux lignes 3 à 27 de la colonne 5, sans faire aucune mention toutefois d'un procédé de démontage.

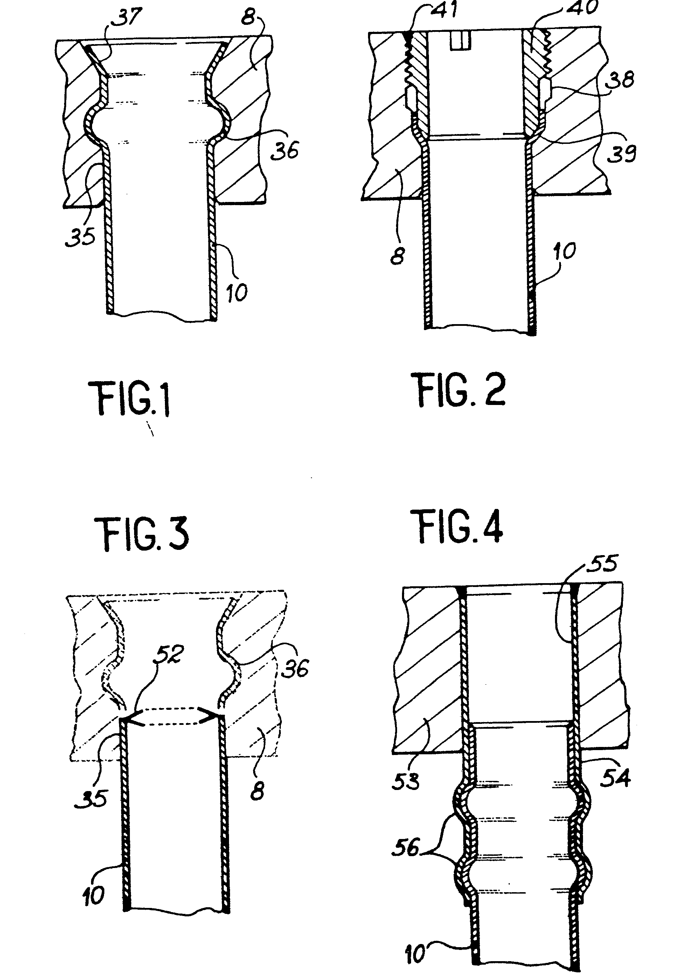

Dans la demande européenne parallèle EP–A1–0 036 821 on a décrit et revendiqué deux autres exemples possibles de fixation des tubes guides à la plaque d'extrémité supérieure de l'assemblage, que l'on rappellera à nouveau ici en se référant aux figures 1 et 2 ci-jointes.

La figure 1 montre une liaison possible entre la pièce d'extrémité supérieure 8 et le tube guide 10. Dans un alésage 35 traversant de part en part la pièce d'extrémité supérieure 8 sont usinées des gorges annulaires 36 ainsi que des alésages 37. Après positionnement du tube guide 10 dans l'alésage 35, on opère une déformation de ce tube guide 10 par roulage ou expansion à la hauteur des formes 36 et 37, de façon à assurer sa fixation axiale dans la pièce d'extrémité supérieure 8.

La figure 2 montre une variante du mode de fixation du tube guide 10 dans la pièce d'extrémité 8 dans laquelle l'alésage 35 est simplifié et remplacé par un fraisage à fond conique. Dans ce mode de mise en œuvre, le tube guide 10 est expansé au fond de l'alésage 38 et il épouse la forme du chanfrein 39. Il est ainsi bloqué axialement à l'aide d'un bouchon 40 en acier inoxydable emmanché ou vissé dans la pièce d'extrémité 8 et bloqué par une soudure extérieure 41.

Ces dispositions engendrent toutefois un certain nombre d'inconvénients sérieux, parmi lesquels, l'impossibilité (dans le cas de la solution de la figure 1) ou de grandes difficultés de démonter les tubes guides, en particulier pour assurer l'enlèvement de la pièce d'extrémité de l'assemblage et procéder ainsi au remplacement des crayons combustibles défectueux.

La présente invention a précisément pour objet un procédé de démontage et reconstruction des tubes guides de la pièce supérieure en vue d'intervenir directement sur les crayons combustibles de façon relativement facile et compatible avec la présence de l'eau de protection nécessaire contre les radiations.

Ce procédé de démontage et reconstruction des tubes guides d'un assemblage combustible dans lequel la fixation de chaque tube guide sur la pièce d'extrémité supérieure est realisée par des expansions dans des orifices munis de gorges annulaires taillées dans ladite pièce, prévoit pour réaliser le remplacement d'un ou plusieurs crayons combustibles défectueux lors d'une opération de maintenance, de découper les parties supérieures de l'ensemble des tubes guides sous les expansions, de retirer ladite pièce supérieure, de remplacer les crayons combustibles défectueux, d'introduire une nouvelle pièce supérieure équipée de tubes courts en nombre au plus égal à celui des tubes guides de l'assemblage et dont le diamètre intérieur est légèrement supérieur au diamètre extérieur des tubes découpés, puis de solidariser lesdits tubes courts, préalablement emmanchés sur les tubes guides correspondants, auxdits tubes guides par déformation par expansion.

De toute façon, l'invention sera mieux comprise en se référant à la description qui suit d'un exemple de mise en œuvre du procédé de démontage et reconstruction des tubes guides, description qui sera faite en se référant aux figures 3 et 4 suivants sur lesquelles:

– la fig. 3 représente la phase de démontage proprement dite d'un tube guide fixé selon le mode de mise en œuvre de la fig. 1 à sa pièce d'extrémité supérieure;

– la fig. 4 représente l'étape consécutive de fixation d'une nouvelle pièce d'extrémité.

Les figures 3 et 4 permettent de comprendre comment, dans le mode de montage des tubes guides selon l'invention, on peut réaliser facilement le remplacement d'un ou plusieurs crayons de combustible 6 par changement de la pièce d'extrémité supérieure 8 lorsqu'une opération de maintenance rend nécessaire une intervention sur ceux-ci. Pour démonter la pièce d'extrémité supérieure 8 et avoir accès aux crayons combustibles pour une intervention, on s'y prend de la façon suivante. La première opération, représentée sur la figure 3 consiste à découper par tout procédé connu mécanique ou chimique, le tube guide 10 dans l'alésage 35 à la hauteur du trait 52 sous les déformations 36 servant de moyens de fixation et pratiquées par expansion dans le tube 10. Cette opération doit bien entendu s'effectuer sur l'ensemble des tubes guides liés à la pièce d'extrémité supérieure 8 qui sont, dans des exemples courants de réalisation d'assemblage combustible de réacteurs à eau légère, au nombre de 24. Une fois ces découpages effectués, on enlève la pièce d'extrémité supérieure 8, ce qui dégage l'ensemble du faisceau des crayons combustibles et des tubes guides sur lesquels on peut alors intervenir facilement pour toute opération de maintenance.

Une fois cette étape franchie, on apporte une nouvelle pièce d'extrémité supérieure 53 (Fig. 4), munie d'un certain nombre de tubes courts 54 dont le diamètre intérieur est légèrement supérieur au diamètre extérieur des tubes guides 10. Ceci permet d'emmancher les différents tubes courts 54 sur les tubes guides 10 et de venir ainsi les coiffer par la nouvelle pièce d'extrémité 53 qui possède à cet effet un nombre d'alésages 55 égal au nombre des tubes 10 de l'assemblage considéré, c'est-à-dire dans le cas présent, 24. Les tubes 54 viennent à frottement doux recouvrir partiellement la partie haute des tubes guides 10; on procède alors à une déformation (expansion par roulage par exemple) des tubes courts 54 et de la partie supérieure des tubes guides 10 de façon à obtenir des déformations radiales annulaires 56 qui assurent la fixation de la nouvelle pièce supérieure 53 sur les différents tubes guides 10 de l'assemblage.

Cette possibilité de démonter la plaque d'extrémité supérieure pour effectuer des opérations de maintenance sur les crayons combustibles est un des avantages très importants de la présente invention.

**Revendication**

1. Procédé de démontage et reconstruction des tubes guides d'un assemblage combustible dans lequel la fixation de chaque tube guide (10) sur la pièce d'extrémité supérieure (8) est réalisée par des expansions (36) dans des orifices munis de gorges annulaires taillées dans ladite pièce (8), qui prévoit pour réaliser le remplacement d'un ou plusieurs crayons combustibles défectueux lors d'une opération de maintenance, de découper les parties supérieures de l'ensemble des tubes guides (10) sous les expansions (36), de retirer ladite pièce supérieure (8), de remplacer les crayons combustibles défectueux, d'introduite une nouvelle pièce supérieure (53) équipée de tubes courts (54) en nombre au plus égal à celui des tubes guides (10) de l'assemblage et dont le diamètre intérieur est légèrement supérieur au diamètre extérieur des tubes découpés, puis de solidariser lesdits tubes courts (54), préalablement emmanchés sur les tubes guides (10) correspondants, auxdits tubes guides par déformation par expansion (56).

**Patentanspruch**

1. Verfahren zur Demontage und zur Rekonstruktion von Führungsrohren einer Brennelementkassette, in der die Befestigung jedes Führungsrohrs (10) an dem oberen Endteil (8) durch Aufweitungen (36) in Öffnungen erfolgt, die mit ringförmigen Nuten versehen sind, die in das Teil (8) eingearbeitet sind, wonach zum Ersetzen eines oder mehrerer defekter Brennstäbe während der Instandsetzung die oberen Teile der Gruppe der Führungsrohre (10) unter den Aufweitungen (36) abgeschnitten werden, das obere Teil (8) entfernt wird, die defekten Brennstäbe ersetzt werden, ein neues oberes Teil (53), das mit kurzen Rohren (54) einer wenigstens gleich grossen Anzahl wie die der Führungsrohre (10) der Brennelementkassette versehen ist, eingesetzt wird, wobei der Innendurchmesser der kurzen Rohre etwas grösser als der Aussendurchmesser der abgeschnittenen Rohre ist, und wonach die kurzen Rohre (56), die vorher auf die entsprechenden Führungsrohre (10) aufgesteckt worden sind, an den Führungsrohren mittels Expansionsverformung (56) befestigt werden.

**Claim**

1. Process for the demounting and rebuilding of the guide tubes of a fuel assembly in which the fixing of each guide tube (10) on the upper end part (8) is carried out by means of enlargements (36) in orifices provided with annular grooves cut in the said part (8), which provides, in order to carry out the replacement of one or more defective fuel rods in the couse of a maintenance operation for the cutting-off of the upper parts of all the guide tubes (10) below the enlargements (36), the withdrawal of the said upper part (8), the replacement of the defective fuel rods, the introduction of a new upper part (53) equipped with short tubes (54) in a number at most equal to that of the guide tubes (10) of the assembly and the internal diameter of which is slightly greater than the external diameter of the tubes cut off, and then integration of the said short tubes (54), previously pressed onto the corresponding guide tubes (10), with the said guide tubes by deformation by expansion (56).

1·1

37    8

35    36

10

## FIG.1

41    40

38

8    39

10

## FIG. 2

## FIG.3

52    36

35    8

10

## FIG.4

55

53    54

56

10